# EUROPÄISCHE PATENTANMELDUNG

(11) **EP 4 792 913 A1**
(43) Veröffentlichungstag der Anmeldung: **19.08.2026**
(21) Anmeldenummer: 26159035.0
(22) Anmeldetag: 17.02.2026
(51) Int. Cl.: B01D 46/00, B01D 46/10

(54) **FILTERGEHÄUSE FÜR GROWSCHRÄNKE**

(30) Priorität: 18.02.2025 DE 202025100855 U
(71) Anmelder: Herzer, Benjamin, 92665 Altenstadt (DE)
(72) Erfinder: Herzer, Benjamin, 92665 Altenstadt (DE)
(74) Vertreter: Limbeck, Achim

(57) **Zusammenfassung**

Die vorliegende Erfindung betrifft ein Filtergehäuse (1) für Growschränke (2), bestehend aus mehreren reversibel miteinander verbindbaren Gehäuseteilen (10, 11, 12), wobei mindestens ein Gehäuseteil (10, 11, 12) eine oder mehrere Luftdurchtrittsöffnungen (100, 110, 120) aufweist und mindestens ein Gehäuseteil (10, 11, 12) einen zur Aufnahme eines Filtermediums (3) vorgesehenen Filterhohlraum (10.1) bildet. Das erfindungsgemäße Filtergehäuse (1) ist dadurch gekennzeichnet, dass mindestens ein erstes Gehäuseteil (11) mindestens einen Magneten (111) und/oder mindestens ein magnetisch anziehbares Element und mindestens ein zweites Gehäuseteil (12) mindestens einen Magneten (121) und/oder mindestens ein magnetisch anziehbares Element umfassen, wobei der oder die Magneten (111, 121) und/oder der oder die magnetisch anziehbaren Elemente ausgebildet und an den mindestens zwei Gehäuseteilen (11, 12) angeordnet sind, sich jeweils gegenseitig zur reversiblen Verbindung der mindestens zwei Gehäuseteile (11, 12) magnetisch anzuziehen.

## Beschreibung

### Technisches Gebiet

Die vorliegende Erfindung betrifft ein Filtergehäuse für Growschränke gemäß dem Oberbegriff des Patentanspruchs 1. Insbesondere betrifft ein Filtergehäuse für Growschränke (auch als Growzelte, Growboxen, Pflanzenzelte bezeichnet), insbesondere für geschlossene oder teilgeschlossene Pflanzenzuchtsysteme, bei denen eine kontrollierte Luftführung, Luftfiltration und Abdichtung von Luftdurchtrittsöffnungen erforderlich ist. Solche Growschränke werden insbesondere im Bereich des Indoor-Gartenbaus eingesetzt und bestehen üblicherweise aus mehreren Gehäuseteilen, die zu einer geschlossenen Struktur zusammengefügt werden. Dabei kommt der Verbindung der einzelnen Gehäuseteile sowie der Abdichtung von Öffnungen, durch die Luft in den Innenraum ein- oder ausströmt, eine besondere Bedeutung zu, da Leckagen, Montageaufwand und eingeschränkte Erweiterbarkeit die Funktionalität solcher Systeme erheblich beeinträchtigen können.

### Stand der Technik

Aus dem Stand der Technik sind zunächst externe Filterkästen bekannt, die als Zuluftfilter außerhalb eines Growschranks angeordnet und über flexible Schlauchleitungen mit dem Growschrank verbunden werden. Solche externen Zuluftfiltersysteme werden außerhalb des Growschranks aufgebaut und über Schlauchverbindungen an entsprechende Zuluftöffnungen angeschlossen. Insbesondere im Bereich des privaten Anbaus in Growschränken ist die Zuluftführung und Zuluftfiltration bislang jedoch häufig nicht oder nur unzureichend berücksichtigt worden. Die bekannten externen Lösungen weisen eine Vielzahl von Nachteilen auf. Die Installation gestaltet sich vergleichsweise zeitaufwendig und kompliziert, da der Filterkasten außerhalb des Growschranks positioniert und über Schlauchleitungen angeschlossen werden muss, wodurch ein schneller Auf- und Abbau praktisch ausgeschlossen ist. Zudem sind solche Systeme verhältnismäßig kostenaufwendig und erfordern aufgrund unterschiedlicher Zuluftöffnungen sowie variierender Bauformen von Growschränken und Growzelten eine individuelle Anpassung der Schlauchführung und Befestigung. Weiterhin beanspruchen externe Filterkästen und zugehörige Schlauchsysteme zusätzlichen Platz außerhalb des Growschranks und werden insbesondere im privaten Wohnumfeld häufig als störend und ästhetisch nachteilig empfunden.

Neben solchen externen Filtersystemen sind aus dem Stand der Technik modulare Gehäusesysteme für Pflanzenzuchtanlagen bekannt, bei denen mehrere Gehäuseteile zu einer geschlossenen Struktur zusammengefügt werden. Ein derartiges modulares System ist beispielsweise aus der Druckschrift DE 20 2018 106 352 U1 bekannt. Dort wird ein Gehäuse für Pflanzenzuchtanlagen beschrieben, das aus mehreren Gehäuseteilen besteht, welche über mechanische Verbindungsmittel miteinander verbunden werden. Die Verbindung der einzelnen Gehäuseteile erfolgt über formschlüssige und kraftschlüssige Verbindungselemente, wobei zusätzlich Dichtungen vorgesehen sind, um Fugen zwischen den Gehäuseteilen abzudichten und einen unkontrollierten Luftaustritt zu vermeiden. Die aus der DE 20 2018 106 352 U1 bekannte Lösung ist auf klassische mechanische Verbindungstechniken ausgerichtet und erfordert eine Vielzahl einzelner Bauteile, die bei der Montage in einer bestimmten Reihenfolge zusammengefügt werden müssen. Eine magnetische Kopplung mehrerer Gehäuseteile untereinander ist dort nicht offenbart, ebenso wenig eine modulare Erweiterbarkeit durch seitliche Verbindung gleichartiger Gehäuseteile.

In der DE 20 2018 106 352 U1 wird ferner beschrieben, dass zur Vereinfachung der Montage und Demontage einzelner Komponenten, insbesondere zum Zwecke des Austausches eines Filtereinsatzes, ein Frontdurchlass mittels zumindest eines Magneten an einem Gehäuse beziehungsweise an dem Filtereinsatz befestigt sein kann. Diese magnetische Befestigung dient ausschließlich der lösbaren Fixierung eines einzelnen Bauteils relativ zu einem Gehäuse und ist auf den Austausch des Filtereinsatzes gerichtet. Eine magnetische Verbindung mehrerer Gehäuseteile untereinander ist in der DE 20 2018 106 352 U1 nicht offenbart. Insbesondere fehlt dort eine Lehre, bei der Magnete oder magnetisch anziehbare Elemente zur reversiblen Kopplung mehrerer Gehäuseteile eingesetzt werden, wobei die Magnete gezielt im Randbereich von Luftdurchtrittsöffnungen angeordnet sind und in Kombination mit einem Dichtungsmittel eine zugleich positionierende und abdichtende Verbindung der Gehäuseteile ermöglichen.

Ein weiteres modulares Pflanzenzuchtsystem ist aus der Druckschrift US 2010/0282745 A1 bekannt. Diese Druckschrift beschreibt ein Gewächshaus- bzw. Propagatorsystem, das aus mehreren separat ausgebildeten Wand-, Dach- und Bodenelementen besteht, die variabel miteinander verbunden werden können, um unterschiedliche Gehäusegrößen zu realisieren. Die Verbindung der einzelnen Elemente erfolgt über mechanische Verbindungsmittel, insbesondere über Laschen, Klappen sowie Haken-Ösen-Verbindungen, wobei zusätzlich Stabilisierungsrahmen aus Metallrohren vorgesehen sind, um die mechanische Festigkeit der Gesamtstruktur zu erhöhen. Zwar offenbart die US 2010/0282745 A1 ein grundsätzlich modulares Konzept, jedoch ist die Verbindung der einzelnen Elemente vergleichsweise aufwendig und setzt eine Vielzahl separater mechanischer Bauteile voraus. Eine magnetische Verbindung der Gehäuseteile ist nicht vorgesehen, ebenso wenig eine gezielte Anordnung von Magneten oder magnetisch anziehbaren Elementen im Bereich von Luftdurchtrittsöffnungen.

Darüber hinaus offenbaren die bekannten Lösungen weder eine Kombination einer magnetischen Verbindung mit einem zwischengeordneten Dichtungsmittel zur zuverlässigen Abdichtung einer Luftdurchtrittsöffnung noch eine Ausgestaltung, bei der mehrere gleichartig ausgebildete Gehäuseteile über seitliche Außenflächen modular miteinander verbindbar sind, um eine flexible Erweiterung oder Vergrößerung eines Filtergehäuses zu ermöglichen. Ebenso ist im Stand der Technik keine Konstruktion bekannt, bei der mehrere Magnete oder Magnetaufnahmen auf einer separaten Halterung zusammengefasst sind, die als vormontierte Einheit in ein Gehäuseteil einsetzbar ist, um Montage, Positionierung und Austausch zu vereinfachen.

Zusammenfassend zeigen die genannten Druckschriften Lösungen, die entweder auf externe Zuluftfiltersysteme mit Schlauchverbindungen oder auf mechanisch gekoppelte modulare Gehäusestrukturen ausgerichtet sind. Eine integrierte Lösung, die eine einfache, reversible und werkzeuglose Verbindung mehrerer Gehäuseteile durch magnetische Kopplung ermöglicht, dabei eine zuverlässige Abdichtung von Luftdurchtrittsöffnungen sicherstellt und zugleich eine modulare Erweiterbarkeit sowie eine kompakte und ästhetisch ansprechende Integration in einen Growschrank erlaubt, ist aus dem Stand der Technik nicht bekannt.

### Darstellung der Erfindung

Vor dem Hintergrund des dargestellten Stands der Technik liegt der vorliegenden Erfindung die Aufgabe zugrunde, ein Filtergehäuse für Growschränke bereitzustellen, das eine einfache, reversible und werkzeuglose Montage und Demontage ermöglicht, eine zuverlässige Abdichtung von Luftdurchtrittsöffnungen sicherstellt und zugleich eine hohe Flexibilität hinsichtlich Erweiterbarkeit und Anpassung an unterschiedliche Einbausituationen bietet. Insbesondere soll eine Lösung geschaffen werden, die ohne externe Filterkästen und aufwendige Schlauchverbindungen auskommt, den Platzbedarf reduziert und eine kompakte sowie ästhetisch ansprechende Integration in den Growschrank ermöglicht. Darüber hinaus soll die Verbindung mehrerer Gehäuseteile reproduzierbar positioniert erfolgen können, um eine definierte Ausrichtung der Gehäuseteile zueinander zu gewährleisten und Montagefehler zu vermeiden.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Filtergehäuses sind in den abhängigen Unteransprüchen angegeben.

Der Erfindungsgrundsatz beruht darauf, mehrere Gehäuseteile eines Filtergehäuses reversibel miteinander zu verbinden, wobei die Verbindung der Gehäuseteile zumindest teilweise durch magnetische Kräfte erfolgt. Hierzu weisen mindestens zwei Gehäuseteile jeweils mindestens einen Magneten und/oder ein magnetisch anziehbares Element auf, die derart an den Gehäuseteilen angeordnet sind, dass sie sich bei Zusammenfügen der Gehäuseteile gegenseitig magnetisch anziehen und dadurch eine reversible Verbindung der Gehäuseteile bewirken. Gleichzeitig bildet mindestens eines der Gehäuseteile einen Filterhohlraum zur Aufnahme eines Filtermediums, während mindestens ein Gehäuseteil eine oder mehrere Luftdurchtrittsöffnungen aufweist, über die ein Luftstrom durch das Filtergehäuse geführt werden kann.

Durch die magnetische Kopplung der Gehäuseteile wird eine werkzeuglose Montage und Demontage ermöglicht, da die Gehäuseteile allein durch Annäherung automatisch zueinander ausgerichtet und verbunden werden. Die magnetische Verbindung erlaubt zugleich eine definierte Positionierung der Gehäuseteile relativ zueinander, insbesondere dann, wenn mehrere Magnete oder magnetisch anziehbare Elemente in geeigneter Weise zueinander angeordnet sind. Dadurch wird sichergestellt, dass die Gehäuseteile bei jeder Montage reproduzierbar in der vorgesehenen Relativlage zusammengefügt werden.

Die bisherigen Growzelte auf dem Markt können nunmehr mit dem erfindungsgemäße Filtergehäuse einfach nachgerüstet werden ohne großen Aufwand zu betreiben oder das Zelt zu beschädigen. Das Filtergehäuse kann jederzeit auch einfach deinstalliert und anschließend zu einem beliebigen Zeitpunkt wieder erneut montiert werden. Durch das Einsetzen eines Filtermediums in den durch mindestens ein Gehäuseteil gebildete Filterhohlraum (Filterkorb) wird die Zuluft, welche in das Growzelt gesaugt wird, frei von Staub etc. gehalten (die Reinheit der gefilterten Luft ist abhängig vom Filtertyp, welcher in die Halterung eingesetzt wird). Es ist zudem ein leichter Wechsel des Filtermediums möglich. Es ist platzsparend sowie ästhetisch ansprechend und stört damit nicht die Wohnatmosphäre im Gegensatz zu anderen Lösungen. Durch die besondere Ausgestaltung des Filtergehäuses gibt es wenig bis hin zu keinen Lichtausfall durch die Zuluftöffnungen, was die Wohnatmosphäre zudem positiv beeinflusst (abhängig vom Filtermedium). Außerdem können größere Filtergehäuse individuell auf kleinere Zuluftöffnungen montiert werden.

### Kurzbeschreibung der Zeichnungen

Weitere Ziele, Merkmale, Vorteile und Anwendungsmöglichkeiten des erfindungsgemäßen Filtergehäuses ergeben sich aus der nachfolgenden Beschreibung eines Ausführungsbeispiels anhand der Zeichnungen.

In den Zeichnungen zeigen
Fig. 1 das erfindungsgemäße Filtergehäuse in einer vorteilhaften Ausführungsform in einer Explosionsansicht;
Fig. 2a und Fig. 2b das zusammengesetzte Filtergehäuse in verschiedenen Ansichten;
Fign. 3 und 4 das erfindungsgemäße Filtergehäuse in einer weiteren vorteilhaften Ausführungsform in Explosionsansichten;
Fign. 5, 6 und 8 das erfindungsgemäße Filtergehäuse wie in den Fign. 3 und 4 an einem Growschrank in Explosionsansichten;
Fig. 7 eine Halterung des erfindungsgemäßen Filtergehäusen in einer vorteilhaften Ausführungsform in unterschiedlichen Ansichten.

### Ausführung der Erfindung

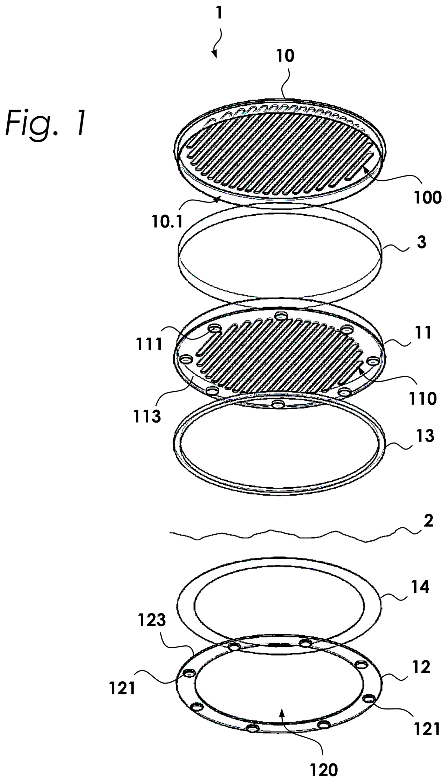

Wie aus Fig. 1 ersichtlich, ist in einer bevorzugten Ausführungsform der Erfindung zwischen mindestens zwei miteinander verbindbaren Gehäuseteilen 11 und 12 ein Dichtungsmittel 13 vorgesehen, das formschlüssig zwischen den Gehäuseteilen 11 und 12 anordenbar ist. Das Dichtungsmittel 13 ist dabei vorzugsweise derart ausgebildet, dass es die Luftdurchtrittsöffnung 100, 110 oder 120 außenseitig umschließt. Hierdurch wird beim Zusammenfügen der Gehäuseteile 11 und 12 eine definierte Abdichtung im Bereich der Luftdurchtrittsöffnung 100, 110 oder 120 erzielt. Der Vorteil dieser Ausgestaltung liegt darin, dass die magnetische Verbindung der Gehäuseteile 11 und 12 gleichzeitig zur Kompression des Dichtungsmittels 13 genutzt werden kann, sodass eine zuverlässige Abdichtung ohne zusätzliche Spann- oder Schraubmittel erreicht wird. Gleichzeitig ermöglicht die formschlüssige Anordnung des Dichtungsmittels 13 eine positionsgenaue Führung des Dichtungsmittels 13 und verhindert ein Verrutschen bei der Montage der Gehäuseteile 11 und 12.

Das Dichtungsmittel 13 ist vorzugsweise elastisch ausgebildet.

Überdies kann es mindestens ein zwischen mindestens zwei Gehäuseteilen 11, 12 formschlüssig anzuordnendes Klebemittel 14 umfassen, welches ausgebildet ist, die Luftdurchtrittsöffnung 100, 110, 120 außenseitig zu umschließen, wobei das Dichtungsmittel 13 und/oder das Klebemittel 14 ringförmig ausgebildet sein können.

Wie aus den Figuren ersichtlich, ist in einer weiteren Ausführungsform der Erfindung mindestens ein Magnet 111 oder ein magnetisch anziehbares Element 111 außenseitig des Dichtungsmittels 13 an dem jeweiligen Gehäuseteil 11 oder 12 angeordnet. Die magnetische Anordnung des Magneten 111 oder des magnetisch anziehbaren Elements 111 außerhalb des Dichtungsmittels 13 bewirkt, dass das Dichtungsmittel 13 nicht unmittelbar von dem Magneten 111 oder dem magnetisch anziehbaren Element 111 durchdrungen oder geschwächt wird. Der Vorteil besteht darin, dass die magnetische Anziehungskraft zwischen den Gehäuseteilen 11 und 12 gleichmäßig über den Bereich des Dichtungsmittels 13 wirkt und eine definierte Anpresskraft erzeugt wird, ohne die strukturelle Integrität des Dichtungsmittels 13 zu beeinträchtigen.

In einer weiteren vorteilhaften Ausführungsform sind mehrere Magnete 111 oder mehrere magnetisch anziehbare Elemente 111 im Randbereich der Luftdurchtrittsöffnung 100, 110 oder 120 verteilt angeordnet. Der Randbereich umfasst hierbei den Umfangsbereich, der die jeweilige Luftdurchtrittsöffnung 100, 110 oder 120 umgibt. Durch die verteilte Anordnung der Magnete 111 oder der magnetisch anziehbaren Elemente 111 wird eine gleichmäßige magnetische Kraftverteilung um die Luftdurchtrittsöffnung 100, 110 oder 120 herum erzielt. Dies führt zu einer gleichmäßigen Anpressung der Gehäuseteile 11 und 12 im Bereich der Luftdurchtrittsöffnung 100, 110 oder 120 und verbessert die Abdichtwirkung des Dichtungsmittels 13. Gleichzeitig wird eine kippfreie Verbindung der Gehäuseteile 11 und 12 erreicht.

In einer weiteren Ausführungsform sind mehrere Magnete 111 oder magnetisch anziehbare Elemente 111 in Umfangsrichtung der Luftdurchtrittsöffnung 100, 110 oder 120 voneinander beabstandet angeordnet. Durch die beabstandete Anordnung der Magnete 111 oder der magnetisch anziehbaren Elemente 111 entsteht eine definierte Kraftverteilung entlang des Umfangs der Luftdurchtrittsöffnung 100, 110 oder 120. Der Vorteil dieser Ausgestaltung liegt in einer verbesserten mechanischen Stabilität der Verbindung der Gehäuseteile 11 und 12 sowie in einer Reduzierung lokaler Spannungsüberhöhungen. Gleichzeitig kann die Anzahl der Magnete 111 gezielt an die Größe der Luftdurchtrittsöffnung 100, 110 oder 120 angepasst werden.

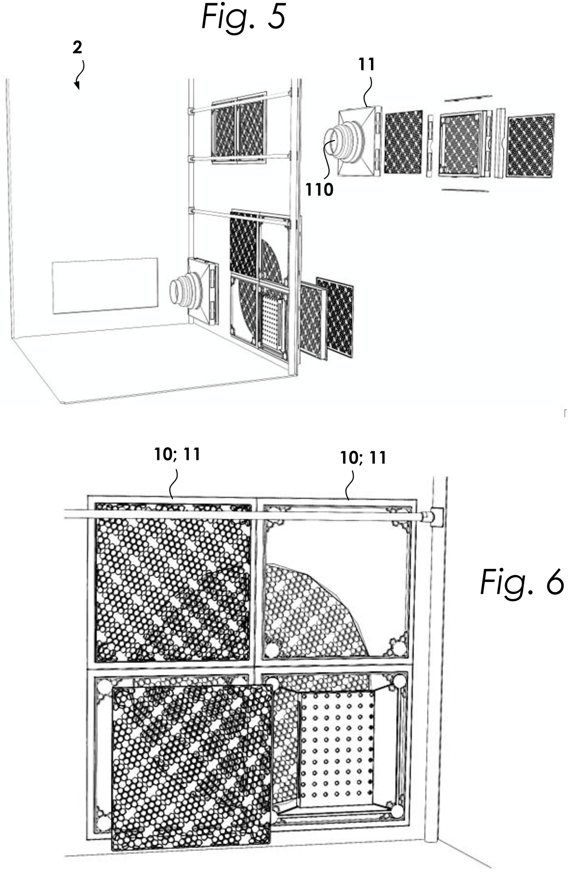

In einer weiteren Ausführungsform weisen die miteinander verbindbaren Gehäuseteile 11 und 12 jeweils eine Anlagefläche 113 beziehungsweise 123 auf (siehe beispielhaft die Figuren 1 und 5), die bei verbundenen Gehäuseteilen 11 und 12 plan aneinander anliegen. Die plan anliegenden Anlageflächen 113 und 123 sorgen für eine definierte Kontaktzone zwischen den Gehäuseteilen 11 und 12. Der Vorteil besteht in einer verbesserten Kraftübertragung zwischen den Gehäuseteilen 11 und 12 sowie in einer erhöhten Formstabilität der Gesamtverbindung des Filtergehäuses 1. Darüber hinaus wird eine exakte Relativpositionierung der Gehäuseteile 11 und 12 unterstützt.

Wie aus den Figuren 5, 6 und 8 erisichtlich, sind die Gehäuseteile 11 und 12 zur Anordnung an gegenüberliegenden Seiten einer Wandung eines Growschranks 2 vorgesehen oder ausgebildet. Hierbei kann eines der Gehäuseteile 11 auf der Innenseite und das andere Gehäuseteil 12 auf der Außenseite der Wandung des Growschranks 2 angeordnet werden. Die magnetische Verbindung erfolgt durch die Wandung des Growschranks 2 hindurch. Der Vorteil dieser Ausgestaltung liegt in einer besonders einfachen Nachrüstbarkeit des Filtergehäuses 1, da keine Durchgangsschrauben oder zusätzlichen Haltelemente erforderlich sind. Gleichzeitig wird eine sichere Befestigung des Filtergehäuses 1 ohne dauerhafte Veränderung der Wandung des Growschranks 2 ermöglicht.

In einer weiteren vorteilhaften Ausführungsform sind mehrere Magnete 111 oder mehrere magnetisch anziehbare Elemente 111 an einem Gehäuseteil 11 oder 12 zueinander derart versetzt angeordnet, dass bei magnetischer Verbindung der Gehäuseteile 11 und 12 eine definierte Relativposition der Gehäuseteile 11 und 12 zueinander vorgegeben ist. Durch die versetzte Anordnung der Magnete 111 oder der magnetisch anziehbaren Elemente 111 entsteht eine eindeutige Zuordnung der Magnetpaare zwischen den Gehäuseteilen 11 und 12. Der Vorteil besteht darin, dass die Gehäuseteile 11 und 12 nur in einer vorgesehenen Orientierung zusammengefügt werden können, wodurch Fehlmontagen vermieden und eine reproduzierbare Positionierung der Gehäuseteile 11 und 12 erreicht werden.

In einer weiteren Ausführungsform ist in der mindestens einen Luftdurchtrittsöffnung 100, 110 oder 120 ein metallisches Lüftungsgitter angeordnet. An dem metallischen Lüftungsgitter können magnetische oder magnetisch anziehbare Elemente 111 angebracht werden. Hierdurch können beispielsweise Sensoren, Halteelemente oder weitere Zubehörteile direkt im Bereich der Luftdurchtrittsöffnung 100, 110 oder 120 positioniert werden. Der Vorteil dieser Ausgestaltung liegt in einer flexiblen Erweiterbarkeit der Funktionalität des Filtergehäuses 1 ohne zusätzliche Halterungen.

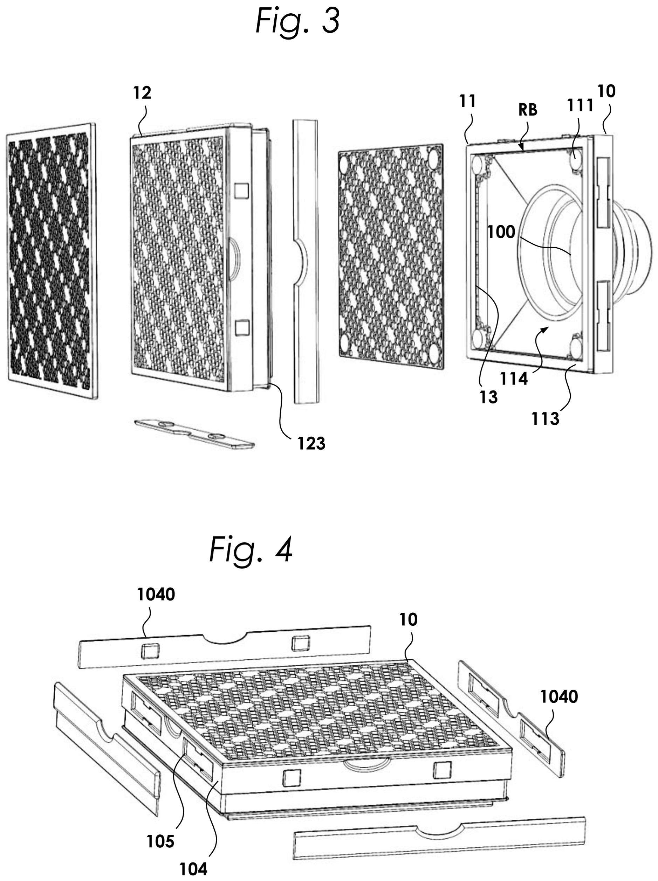

Wie aus Fig. 4 ersichtlich, ist in einer weiteren vorteilhaften Ausführungsform an mindestens einem der Gehäuseteile 10 ein seitliches Verbindungselement 105 vorgesehen. Das seitliche Verbindungselement 105 ist dazu ausgebildet, das jeweilige Gehäuseteil 10 mit weiteren gleichartig ausgebildeten Gehäuseteilen 10' oder 10'' reversibel über die seitlichen Außenflächen 104 zu verbinden. Der Vorteil dieser Ausgestaltung liegt in der modularen Erweiterbarkeit des Filtergehäuses 1. Mehrere identische Gehäuseteile 10 können miteinander kombiniert werden, um die Filterfläche oder das Volumen des Filtergehäuses 1 zu vergrößern, ohne unterschiedliche Bauteiltypen vorhalten zu müssen.

In einer weiteren Ausführungsform ist das seitliche Verbindungselement 105 als Steckverbindung, Rastverbindung, formschlüssige Verbindung, kraftschlüssige Verbindung oder magnetische Verbindung ausgebildet. Durch diese Vielfalt an Verbindungsmöglichkeiten des Verbindungselements 105 kann das Filtergehäuse 1 an unterschiedliche mechanische Anforderungen angepasst werden. Der Vorteil besteht in einer hohen konstruktiven Flexibilität bei gleichzeitiger einfacher Montage der Gehäuseteile 10.

Wie aus den Figuren 3 un 4 ersichtlich, ist in einer weiteren vorteilhaften Ausführungsform der Erfindung an den seitlichen Außenflächen 104 der Gehäuseteile 10 mindestens eine Blende 1040 vorgesehen. Die Blende 1040 ist dazu ausgebildet, das mindestens eine Verbindungselement 105 und/oder die entsprechende Außenfläche 104 zumindest abschnittsweise abzudecken. Hierdurch werden die Verbindungselemente 105 vor mechanischer Beschädigung geschützt und zugleich optisch verdeckt. Der Vorteil besteht in einer verbesserten Schutzfunktion sowie in einer aufgeräumten äußeren Erscheinung des Filtergehäuses 1.

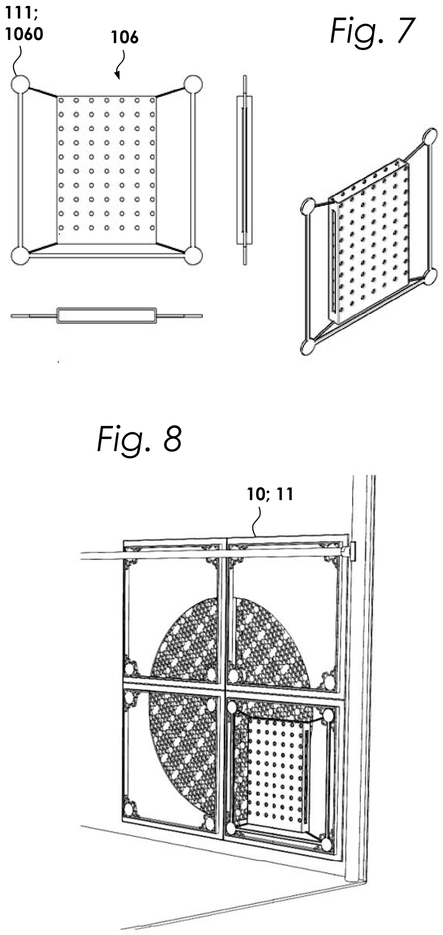

Wie aus den Fig. 6 und 7 ersoichtlich, umfasst das Filtergehäuse 1 vorzugsweise eine Halterung 106, die mehrere Magnete 111 oder mehrere magnetisch anziehbare Elemente 111 beziehungsweise Magnetaufnahmen trägt. Die Halterung 106 ist als Einheit in ein Gehäuseteil 10, 11 oder 12 einsetzbar. Die Halterung 106 kann formschlüssig, kraftschlüssig, magnetisch oder steckbar im jeweiligen Gehäuseteil 10, 11 oder 12 fixiert werden. Der Vorteil dieser Ausgestaltung liegt in einer vereinfachten Montage des Filtergehäuses 1, da mehrere Magnete 111 als vormontierte Einheit eingesetzt werden können. Gleichzeitig wird eine präzise Positionierung der Magnete 111 ermöglicht und die Austauschbarkeit einzelner Magnetanordnungen verbessert.

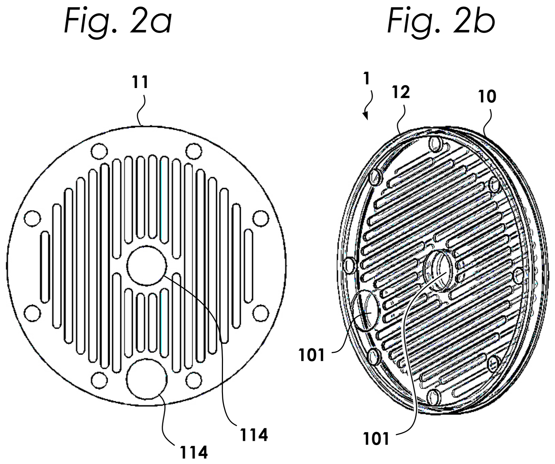

Die Gehäuseteile 10, 11, 12 können rund-, oval- oder mehreckringförmig ausgebildet sein, wobei es - wie aus den Fign. 1, 2b ersichtlich - ganz besonders vorteilhaft ist, wenn das Gehäuseteil 12 ringartig ausgebildet ist, der zur Montage des erfindungsgemäßen Filtergehäuses 1 als Halterungsring an einer Innenwandung eines Growzeltes 2 anbringbar ist.

Ganz besonders bevorzugt sind mindestens zwei Gehäuseteile 10, 11 und/oder hohlzylinderförmig ausgebildet und formschlüssig zur Bildung des Filterhohlraum 10.1 miteinander verbindbar.

Eine ganz besonders vorteilhafte Ausführung der Erfindung sieht vor, dass mindestens zwei Gehäuseteile 10, 11 jeweils eine weitere Durchtrittsöffnung 101, 114 aufweisen, wobei die mindestens zwei weiteren Durchtrittsöffnungen 101, 114 derart entsprechend korrespondierend an den mindestens zwei Gehäuseteile 10, 11 angeordnet sind, dass sie eine gemeinsame Durchtrittsöffnung an dem Filtergehäuse 1 bilden.

In dem in den Figuren 1-2b dargestellten Ausführungsbeispiel der Erfindung besteht das erfindungsgemäße Filtergehäuse vorzugsweise aus zwei identischen ca. 2-3 cm hohen hohlen zylindrischen oder rechteckigen Gehäuseteilen 10, 11, welche ineinandergesteckt werden können, um ein Filtermedium 3 dicht einzuschließen. Das Filtergehäuse 1 ist dabei vorzugsweise mit Luftschlitzen an der Ober- und Unterseite versehen, so dass die Zuluft kontrolliert durch das Filtermedium 3 geleitet wird. Das Filtergehäuse 1 ist vorzugsweise so konstruiert, dass es sich mit den Fingern durch leichtes Ziehen am äußeren Filterkorbteil wieder öffnen lässt.

Das Filtergehäuse 1 besitzt am äußeren Rand vorzugsweise Neodym-Magnete und ein Dichtungsband (bspw. ein Kompriband) 13. Das Dichtungsmittel (-band) 13 ist vorzugsweise ~3 mm höher als die Magnete 111 und/oder Elemente und ermöglicht somit ein sauberes Abschließen an der Growzeltwand, auch bei unebener Oberfläche (z. B. bei Nähten).

In einer weiteren vorteilhaften Ausführungsform ist das Dichtungsmittel 13 als vor komprimiertes Dichtungsband ausgebildet, insbesondere als ein expandierbares, imprägniertes Schaumdichtband. Ein solches Dichtungsband weist vorzugsweise witterungsbeständige und UVbeständige Eigenschaften auf und ist derart materialverträglich ausgebildet, dass es mit unterschiedlichen Werkstoffen der Gehäuseteile 10, 11, 12 eine zuverlässige Abdichtung bildet. Das Dichtungsband kann eine leicht haftende oder oberflächenaktive Beschaffenheit aufweisen, wodurch es bei der Montage an der anliegenden Oberfläche positioniert und fixiert werden kann. Aufgrund seiner komprimierbaren und zugleich formstabilen Struktur passt sich das Dichtungsband beim Zusammenfügen der Gehäuseteile 10, 11, 12 dem jeweiligen Untergrund an und gleicht Unebenheiten aus, ohne seine Dichtwirkung zu verlieren. Durch die Kombination des komprimierbaren Dichtungsbandes mit der magnetischen Verbindung der Gehäuseteile 10, 11, 12 wird eine gleichmäßige Anpressung erreicht, sodass eine dauerhafte und zuverlässige Abdichtung der Luftdurchtrittsöffnung 100, 110, 120 gewährleistet ist.

Das zweite Gehäuseteil 12 (Halterungsring) ist in dieser Ausführung ebenfalls mit Neodym-Magneten bestückt und besitzt zudem eine leichte Klebebeschichtung (Klebering) 14 und kann im ersten Schritt an die Growzeltwand (Folie) geklebt werden. Er lässt sich auch wieder rückstandslos entfernen.

Anwendung: Das zweite Gehäuseteil 12 (Halterungsring) wird im ersten Schritt an die Innen- oder Außenwand des Growzeltes über die gewünschte Zuluftöffnung geklebt. Anschließend werden die beiden Gehäuseteile 10, 11, welche den Filterkorb bilden, auf der Gegenseite der Growzeltwand gesetzt. Der Filterkorb 10, 11 hält durch die Magnete an der richtigen Position fest. Zum Wechseln des Filtermediums 3 kann der Filterkorb im Ganzen oder nur der äußere Teil abgenommen und anschließend einfach wieder an derselben Position angebrachten werden. Der Wechsel kann also auch direkt an der Growzeltwand stattfinden, ohne den gesamten Filterkorb abnehmen zu müssen. Der Filterkorb kann problemlos mit einem Handgriff entfernt (schieben) und dank der Magnete auch einfach wieder an der gleichen Stelle platziert werden.

Für die einzelnen Zuluftöffnungen der verschiedenen Growzelte muss die richtige Filtergehäuse-Größe gewählt werden. Außerdem kann zwischen Filtergehäusen mit und ohne Kabeldurchführung/ Unterdruckanzeige gewählt werden. Alle Varianten besitzen vorzugsweise den identischen Aufbau.

In einer weiteren vorteilhaften Ausgestaltung ist mindestens ein Magnet lösbar an einem Gehäuseteil oder an einer Halterung 106 befestigt. Der Magnet kann insbesondere aufschraubbar, steckbar oder in vergleichbarer Weise bspw. in entsprechenden Magnetaufnahmen 1060 an der Halterung 106 austauschbar anordbar sein. Hierzu kann das jeweilige Gehäuseteil oder die Halterung 106 eine Gewindebohrung, eine Gewindehülse, eine Rastaufnahme oder eine vergleichbare Befestigungsstruktur aufweisen, in welche der Magnet formschlüssig und/oder kraftschlüssig eingesetzt werden kann. Durch diese lösbare Befestigung wird es ermöglicht, Magnete bei Bedarf auszutauschen, zu ergänzen oder in ihrer Anzahl zu variieren. Auf diese Weise kann die Haltekraft zwischen den miteinander verbindbaren Gehäuseteilen gezielt angepasst werden, beispielsweise in Abhängigkeit von der Größe des Filtergehäuses, der Materialstärke der Wandung oder der eingesetzten Dichtungsmittel. Ferner erlaubt die austauschbare Befestigung eine einfache Wartung sowie den Ersatz einzelner Magnete im Falle von Verschleiß oder Beschädigung, ohne dass das gesamte Gehäuseteil ausgetauscht werden muss.

Darüber hinaus kann vorgesehen sein, dass mehrere Magnete 111 oder Magnetaufnahmen 1060 auf einer gemeinsamen Halterung 106 angeordnet sind, wobei die Halterung 106 als vormontierte Einheit in ein Gehäuseteil 10, 11, 12 einsetzbar ist. Auch in diesem Fall können einzelne Magnete 111 lösbar an der Halterung 106 befestigt sein, wodurch eine modulare Anpassung der Magnetanordnung ermöglicht wird.

In einer weiteren vorteilhaften Ausgestaltung ist an seitlichen Außenflächen eines Gehäuseteils 10 mindestens eine Blende 1040 vorgesehen, die beabstandet von der jeweiligen Außenfläche 104 angeordnet ist. Zwischen der Blende 1040 und der seitlichen Außenfläche 104 wird dadurch ein Aufnahmeraum gebildet, der insbesondere zur Aufnahme von Kabeln dient. Der Abstand kann durch integrierte Abstandselemente, beispielsweise Rippen, Stege, Distanznasen oder eine entsprechend gewölbte oder ausbuchtende Form der Blende 1040 realisiert sein. Der gebildete Aufnahmeraum ermöglicht es, steife, verdrehte oder abgeknickte Kabel entlang der Außenfläche des Gehäuseteils 10 zu führen, ohne dass diese hervorstehen oder mechanisch belastet werden. Dadurch wird eine geordnete und geschützte Kabelführung erreicht, was insbesondere bei in Growschränken 2 eingesetzten Sensoren, Lüftern, Beleuchtungseinrichtungen oder weiteren elektrischen Komponenten von Vorteil ist. Gleichzeitig kann die Blende 1040 so ausgebildet sein, dass sie seitliche Verbindungselemente zumindest abschnittsweise abdeckt und dadurch sowohl eine optisch ansprechende Gestaltung als auch einen mechanischen Schutz der Verbindungselemente gewährleistet. Die beabstandete Anordnung der Blende 1040 trägt somit sowohl zur funktionalen Integration von Kabeln als auch zur strukturellen und optischen Ausgestaltung des Filtergehäuses bei.

In einer weiteren Ausgestaltung können einzelne Gehäuseteile 10, 11, 12 zumindest abschnittsweise mit einer wabenförmigen Struktur ausgebildet sein. Die Wabenstruktur kann als Durchbruchstruktur, Verstärkungsstruktur oder Materialaussparung ausgeführt sein. Eine solche Ausbildung ermöglicht eine Reduzierung des Materialeinsatzes bei gleichzeitiger struktureller Stabilität. Ferner kann durch die wabenförmige Ausgestaltung eine verbesserte Luftdurchlässigkeit oder eine definierte Luftführung erreicht werden. Die Wabenstruktur kann dabei einstückig mit dem jeweiligen Gehäuseteil 10, 11, 12 ausgebildet oder als separates Element eingesetzt sein. Neben funktionalen Vorteilen erlaubt die Wabenstruktur zudem eine individuelle Gestaltung des Filtergehäuses.

Die beabstandet angeordnete Blende 1040 kann zusätzlich mit strukturellen Ausnehmungen, Wabenmustern oder sonstigen Durchbruchsstrukturen versehen sein, die sowohl der Gewichtsreduktion als auch einer individuellen optischen Gestaltung dienen.

Darüber hinaus kann vorgesehen sein, dass an einem Gehäuseteil 10, 11, 12 eine Aufnahme oder Befestigungsmöglichkeit für eine CO₂-Bag vorgesehen ist. Hierzu können insbesondere Haken, Halteösen, Magnetbereiche oder formschlüssige Aufnahmen ausgebildet sein, die eine Positionierung einer CO₂-Bag im Bereich der Luftdurchtrittsöffnung oder im Luftstrom ermöglichen. Durch die Integration einer solchen Befestigungsmöglichkeit kann eine kontrollierte CO₂-Zufuhr in den Growschrank unterstützt werden, ohne dass zusätzliche externe Halterungen erforderlich sind.

### Liste der Bezugsziffern

- 1: Filtergehäuse
- 2: Growschrank
- 3: Filtermedium
- 10: Gehäuseteil
- 10.1: Filterhohlraum
- 11: erstes Gehäuseteil
- 12: zweites Gehäuseteil
- 13: Dichtungsmittel
- 100: Luftdurchtrittsöffnung an 10
- 101: Durchtrittsöffnung an 10
- 104: seitliche Außenfläche
- 105: seitliches Verbindungselement
- 106: Halterung
- 110: Luftdurchtrittsöffnung an 11
- 111: Magnet an 11
- 113: Anlagefläche an 11
- 114: Durchtrittsöffnung an 11
- 120: Luftdurchtrittsöffnung an 12
- 121: Magnet an 12
- 123: Anlagefläche an 12
- 1040: Blende
- 1060: Magnetaufnahmen an 106
- RB: Randbereich

## Patentansprüche

1. Filtergehäuse (1) für Growschränke (2), bestehend aus mehreren reversibel miteinander verbindbaren Gehäuseteilen (10, 11, 12), wobei mindestens ein Gehäuseteil (10, 11, 12) eine oder mehrere Luftdurchtrittsöffnungen (100, 110, 120) aufweist und mindestens ein Gehäuseteil (10, 11, 12) einen zur Aufnahme eines Filtermediums (3) vorgesehenen Filterhohlraum (10.1) bildet,
**dadurch gekennzeichnet, dass**
mindestens ein erstes Gehäuseteil (11) mindestens einen Magneten (111) und/oder mindestens ein magnetisch anziehbares Element und mindestens ein zweites Gehäuseteil (12) mindestens einen Magneten (121) und/oder mindestens ein magnetisch anziehbares Element umfassen, wobei der oder die Magneten (111, 121) und/oder der oder die magnetisch anziehbaren Elemente ausgebildet und an den mindestens zwei Gehäuseteilen (11, 12) angeordnet sind, sich jeweils gegenseitig zur reversiblen Verbindung der mindestens zwei Gehäuseteile (11, 12) magnetisch anzuziehen.

2. Filtergehäuse (1) nach Anspruch 1,
**dadurch gekennzeichnet, dass**
es mindestens ein zwischen mindestens zwei Gehäuseteilen (11, 12) formschlüssig anzuordnendes Dichtungsmittel (13) und/oder Klebemittel umfasst, welches ausgebildet ist, die Luftdurchtrittsöffnung (100, 110, 120) außenseitig zu umschließen.

3. Filtergehäuse (1) nach Anspruch 2,
**dadurch gekennzeichnet, dass**
der mindestens eine Magnet (111) und/oder das mindestens eine magnetisch anziehbare Element außenseitig des Dichtungsmittels (13) an dem jeweiligen Gehäuseteil (11, 12) angeordnet ist.

4. Filtergehäuse (1) nach einem der vorangegangenen Ansprüche,
**dadurch gekennzeichnet, dass**
mehrere Magnete (111) und/oder mehrere magnetisch anziehbare Elemente im Randbereich (RB) der mindestens einen Luftdurchtrittsöffnung (100, 110, 120) verteilt angeordnet sind.

5. Filtergehäuse (1) nach einem der vorangegangenen Ansprüche,
**dadurch gekennzeichnet, dass**
mehrere Magnete (111) und/oder magnetisch anziehbare Elemente in Umfangsrichtung der Luftdurchtrittsöffnung (100, 110, 120) voneinander beabstandet angeordnet sind.

6. Filtergehäuse (1) nach einem der vorangegangenen Ansprüche,
**dadurch gekennzeichnet, dass**
die miteinander verbindbaren Gehäuseteile (11, 12) jeweils eine Anlagefläche (113, 123) aufweisen, die bei verbundenen Gehäuseteilen plan aneinander anliegen.

7. Filtergehäuse (1) nach einem der vorangegangenen Ansprüche,
**dadurch gekennzeichnet, dass**
die Gehäuseteile (11, 12) zur Anordnung an gegenüberliegenden Seiten einer Wandung vorgesehen und/oder ausgebildet sind.

8. Filtergehäuse (1) nach einem der vorangegangenen Ansprüche,
**dadurch gekennzeichnet, dass**
mehrere Magnete (111) und/oder mehrere magnetisch anziehbare Elemente an einem Gehäuseteil (11, 12) zueinander derart versetzt angeordnet sind, sodass bei magnetischer Verbindung der Gehäuseteile (11, 12) eine definierte Relativposition der Gehäuseteile (11, 12) zueinander vorgegeben ist.

9. Filtergehäuse (1) nach einem der vorangegangenen Ansprüche,
**dadurch gekennzeichnet, dass**
in der mindestens einen Luftdurchtrittsöffnung (100, 110, 120) ein metallisches Lüftungsgitter angeordnet ist, an dem magnetische oder magnetisch anziehbare Elemente anbringbar sind.

10. Filtergehäuse (1) nach einem der vorangegangenen Ansprüche,
**dadurch gekennzeichnet, dass**
an mindestens einem der Gehäuseteile (10) mindestens ein seitliches Verbindungselement (105) vorgesehen ist, das dazu ausgebildet ist, das jeweilige Gehäuseteil (10) mit weiteren gleichartig ausgebildeten Gehäuseteilen (10', 10") reversibel über die seitlichen Außenflächen (104) zu verbinden.

11. Filtergehäuse (1) nach Anspruch 11,
**dadurch gekennzeichnet, dass**
das mindestens eine seitliche Verbindungselement (105) als Steckverbindung, Rastverbindung, formschlüssige Verbindung, kraftschlüssige Verbindung und/oder magnetische Verbindung ausgebildet ist.

12. Filtergehäuse (1) nach einem der vorangegangenen Ansprüche,
**dadurch gekennzeichnet, dass**
an den seitlichen Außenflächen (104) der Gehäuseteile (10) mindestens eine Blende (1040) vorgesehen ist, die ausgebildet ist, das mindestens eine Verbindungselement (105) und/oder die entsprechende Außenfläche (104) zumindest abschnittsweise abzudecken.

13. Filtergehäuse (1) nach einem der vorangegangenen Ansprüche,
**dadurch gekennzeichnet, dass**
es eine Halterung (106) umfasst, die mehrere Magnete (111) und/oder mehrere magnetisch anziehbare Elemente und/oder zur Aufnahme eines Magneten oder eines Elements ausgebildete Magnet- oder Elementaufnahmen trägt und die als Einheit in ein Gehäuseteil (10, 11, 12) einsetzbar ist, wobei die Halterung (106) vorzugsweise formschlüssig, kraftschlüssig, magnetisch und/oder steckbar in das Gehäuseteil (10, 11, 12) einsetzbar ist.

14. Filtergehäuse (1) nach einem der vorangegangenen Ansprüche,
**dadurch gekennzeichnet, dass**
mindestens ein Magnet (111) lösbar, insbesondere aufschraubbar, an dem jeweiligen Gehäuseteil (10, 11, 12) oder an der Halterung (106) befestigt ist.

15. Filtergehäuse (1) nach einem der vorangegangenen Ansprüche,
**dadurch gekennzeichnet, dass**
die Blende (1040) derart ausgebildet ist, dass sie beabstandet von der seitlichen Außenfläche (104) angeordnet ist und zwischen der Blende (1040) und der Außenfläche (104) ein Aufnahmeraum zur Aufnahme von Kabeln gebildet ist.
